# EUROPEAN PATENT SPECIFICATION

(11) **EP 0 926 859 B1**
(45) Date of publication and mention of the grant of the patent: **03.11.2004**
(21) Application number: 98310504.0
(22) Date of filing: 21.12.1998
(51) Int. Cl.: H04L 12/46, H04L 12/56

(54) **Multiple virtual router**
Mehrfach-virtuelle Wegsucher
Routeur virtuel multiple

(30) Priority: 23.12.1997 US 996934
(43) Date of publication of application: 30.06.1999
(73) Proprietor: Nortel Networks Limited, St. Laurent, Quebec H4S 2A9 (CA)
(72) Inventor: Pegrum, Scott, Nepean, Ontario K2H 6Y3 (CA); Antinucci, Enrico, Nepean, Ontario K2H 8S8 (CA); Thielan, Kirk, Plymouth, Minnesota 55442 (US); Hardwick, Knneth, Newburgh, Oregon 97132 (US); Stone, Jeffery, Malibu, California 90265 (US)
(74) Representative: Anderson, Angela

(56) References cited:
- US-A- 5 550 816
- LI S ET AL: "Active gateway: a facility for video conferencing traffic control" COMPUTER SOFTWARE AND APPLICATIONS CONFERENCE, 1997. COMPSAC '97. PROCEEDINGS., THE TWENTY-FIRST ANNUAL INTERNATIONAL WASHINGTON, DC, USA 13-15 AUG. 1997, LOS ALAMITOS, CA, USA,IEEE COMPUT. SOC, US, 13 August 1997 (1997-08-13), pages 308-311, XP010247319 ISBN: 0-8186-8105-5
- BARRETT R J: "Network management fit to beat the band" COMMUNICATIONS, DEC. 1989, UK, vol. 6, no. 12, pages 35-36, 40, XP001080629 ISSN: 0266-8009
- ANONYMOUS: "MultiVPN for the Enterprise, breaking down the Barriers to VPNs" ASCEND WHITE PAPER, [Online] September 1998 (1998-09), pages 1-14, XP002199745 Alameda, CA, USA Retrieved from the Internet: <URL:http://www.firstvpn.com/papers/ascend /mvpnwp1.pdf> [retrieved on 2002-05-15]

## Description

The invention relates generally to the field of routers and more particularly, to a single device having multiple independent router modules therein.

With the growing popularity of the Internet and with the growing popularity of networks in general, there is a trend towards centralized network services and centralized network service providers. To be profitable, however, network service providers need to constantly maintain and if possible enlarge their customer base and their profits. However, leased line services are coming under increased competition causing profit margins to decrease for these providers. Thus, an increased number of providers are trying to attract small and medium sized businesses by providing centralized network management. Part of this network management should be that the service is provided from a centralized, secure network facility. There has been difficulty providing this service, however, due to address conflicts, security problems and costly upgrade requirements to customer premise equipment. Historical independent network development has resulted in conflicting and overlapping address space between the individual networks and the management networks.

Others have attempted to solve these problems by using encapsulating techniques, such as internet protocol (IP) tunneling, to separate network traffic from unrelated networks. This method, however, suffers from many of the same problems. Inter-network security can not be guaranteed in IP tunneling as it relies upon customer premise equipment to be correctly configured. These encapsulating techniques also require upgrading the customer premise equipment to be compatible with the IP tunneling. Further, performance can be a problem since routing disturbances caused by one customer may affect the routing performance of another customer's network.

US Patent Number 5,550,816 describes a physical switching device for use in a communication network to switch open systems interconnection network layer packets including the use of a management apparatus. Paper "Active Gateway: A Facility for Video Conferencing Traffic Control" by Shunge-li and Bharat Bhargava presented at the Computer Software and Applications conference 1997 teaches the architecture and features of an application level facility called Active Gateway for video conferencing traffic and quality of service control. This includes discussion that processes, channels and packets can be prioritized in a programmable way. The paper "Network Management Fit to Beat the Band" by Robert J Barrett published in Communications in December 1989 teaches different approaches to network analysis and management including use of out of band communication.

Accordingly there exists the need for a centralized device which allows the implementation of separate networks over common infrastructure while providing security and performance to each network without the need to upgrade customer premise equipment.

The need also exists for such a device which is smaller and cheaper than multiple separate routers yet easily managed.

The need also exists for such a device which prevents unauthorized users on any of the networks from reconfiguring or otherwise managing the device.

The need also exists for such a device having the ability to provide different quality of service to different networks.

It is an object of the present invention to provide a device which substantially fulfills at least one of the above needs.

This and other objects of the invention will become apparent to those skilled in the art from the following description thereof.

It has now been discovered that the above and other objects may be accomplished by embodiments of the present multiple virtual router described herein. According to this invention there is provided a multiple virtual router comprising:
a plurality of routing modules (12);
a port (14) logically coupleable to different ones of said plurality of routing modules; and
a management routing module (18) connectable to each of said plurality of routing modules,
characterized in that:
said management routing module is capable of selectively communicating with and configuring each of said plurality of routing modules so as to allow configuration and diagnostic access to said plurality of routing modules in a manner that takes place out-of-band from normal user traffic through at least one of said plurality of routing modules; and
wherein a first of said plurality of routing modules is assigned a higher priority for routing data than others of said plurality of routing modules.

According to a further aspect of the invention there is provided a method of configuring a multiple virtual router, said method comprising the steps of:
logically coupling a management module (18) to a plurality of routing modules (12); and
logically coupling a port (14) to different ones of said plurality of routing modules;
characterised in that the method further comprises the steps of:
configuring said plurality of routing modules with said management module so as to allow configuration and diagnostic access to said plurality of routing modules in a manner that takes place out-of-band from normal user traffic through at least one of said plurality of routing modules; and
assigning a first of said plurality of routing modules a higher priority for routing data than others of said plurality of routing modules.

For a fuller understanding of the nature and objects of the invention, reference should be made to the following detailed description and accompanying drawings, in which:
FIG. 1 depicts a block diagram of the preferred embodiment of a multiple virtual router;
FIG. 2 depicts the embodiment of FIG. 1 showing a management module connected to multiple routing modules;
FIG. 3 depicts a possible configuration of multiple virtual routers in accordance with embodiments of the present invention, being utilized by multiple networks using different protocols.

A multiple virtual router is a subsystem that allows multiple network layer protocols (i.e. IP, IPX and Bridging protocols) to co-exist on the same physical port 14. It provides a common set of interfaces between the Media Layer and the protocol processes. Media events or changes in the protocol port (i.e. port deletion, media deregistration, media registration, media state change, media mtu change, connectionless routing metric change, etc.) may be broadcast to each protocol giving them an accurate view of the system.

A multiple virtual router is disclosed which includes a housing and multiple routing modules distributed therein. A separate table is associated with each protocol within each routing module. The multiple virtual router also includes a management module for configuring the routing modules. Communications between the management module and the routing modules occurs out of band from the user traffic. Further, the housing has multiple ports each of which is logically coupleable to different routing modules.

Multiple virtual routers maintain a set of logical network interfaces 16 mapped to the physical ports 14 (i.e. DS3 frame relay ports) that allow a protocol to forward packets between different media, such as local area networks (i.e. Fddi, Ethernet, and Token Ring) and wide area networks (i.e. FrDte, X25Dte, and Ppp). The logical ports (i.e. DLCI on the frame relay port) are distributed to each logical processor and updated by a forwarding agent. The forwarding agent is used to provide current information about the node and physical interfaces 14 to the routing modules 12 so that forwarding decisions can be readily made.

Each physical port 14 may contain information about the media and data used by the protocol to forward packets to that physical port 14. The media specific portion is sent by media applications when they register with the multiple virtual router. Similarly the protocol data is specified by the protocol when it registers with the multiple virtual router.

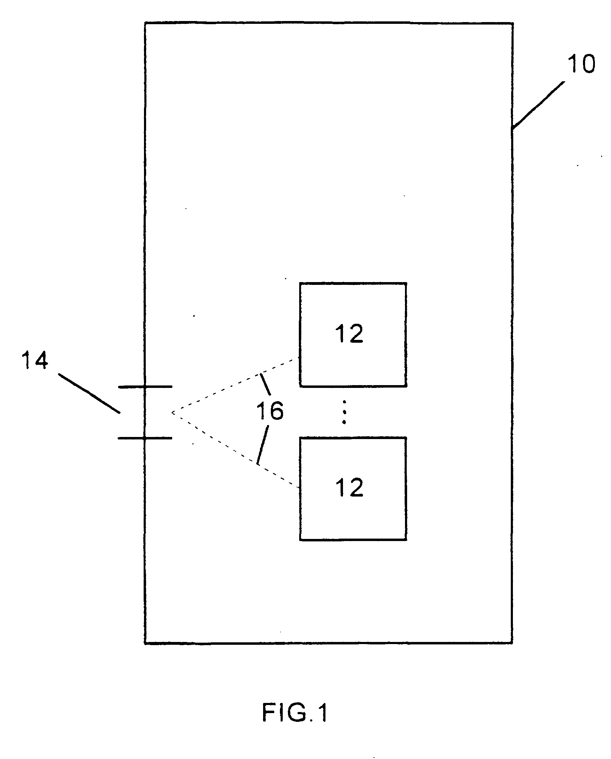

FIG. 1 is an illustration of an embodiment of the invention including various multi-protocol router modules 12 disposed within a common housing 10. Those skilled in the art will recognize that while FIG. 1 illustrates these routing modules 12 as being entirely disjoint, it is possible to connect some or all of them together without departing from the scope of the invention. The housing 10 has at least one physical port 14 which may be selectively, logically connected to various ones of the router modules 12 as represented by logical connections 16 (interfaces). While FIG. 1 illustrates only one physical port 14 and two routing modules 12, those skilled in the art will recognize that more than two routing modules 12 and/or more than one physical port 14 may be employed. Further, a particular physical port 14 may be selectively, logically connected/connectable to (i) one router module 12, (ii) multiple router modules 12, or (iii) all of the available router modules 12. With certain exceptions which will become evident from this disclosure, the routing modules 12 perform the same as conventional routers.

The routing modules 12 may be assigned different priorities for performing certain tasks. For example, assigning one routing module 12 a higher priority route calculation (i.e. the recalculation of forwarding information upon receiving routing update/changes from other nodes) and forwarding of data than another routing module 12 enables the higher priority routing module 12 to route traffic received on the links 16 to that routing module 12 at a higher priority than traffic on lower priority routing modules 12. In this way, a high priority client could be provided a high priority virtual router and a low priority client could be assigned a lower priority virtual router. In addition, routing table updates, and routing processing may be prioritized as well. This prioritization would give the service provider the opportunity to offer different services and charge different rates for different clients.

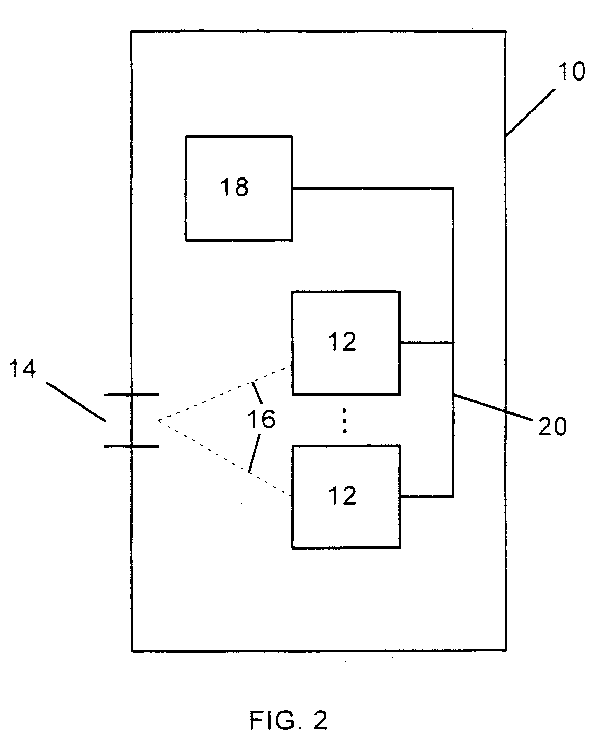

A multiple virtual router may also include a management router module 18 as illustrated in FIG. 2. The management router module 18 allows configuration and diagnostic access to the router modules 12 in a secure manner which may be out-of-band with normal user traffic as shown by connections 20. Connections 20 may be a bus, point to point connections or simply logical connections. The management router module 18 may enable a management network to access each individual router module 12 in a particular multiple virtual router without being connected to each individual router module 12 (i.e. without the need for a full mesh interconnection between the management network and each individual router module 12). Additionally, a management router module 18 could route management traffic to another multiple virtual router if necessary. In this way, a variety of multiple virtual routers could be managed using normal IP or IPX routing techniques.

In today's IP and IPX networks, management of routers occurs in-band with user traffic. Thus great efforts must be expended to protect the management interface from illegitimate access by users of the network. Another concern is that the managing authority could be denied access to the router and a customer could be denied service. By providing a completely separate management network (including a management router module 18) as embodiments of the present invention can, the management authority can effectively configure and control the router network in a secure and consistent fashion without these typical security and accessability concerns. One skilled in the art will recognize that it is possible to use conventional in-band management techniques with the present invention, however, then the management authority would still need to be concerned with the present security and accessability issues.

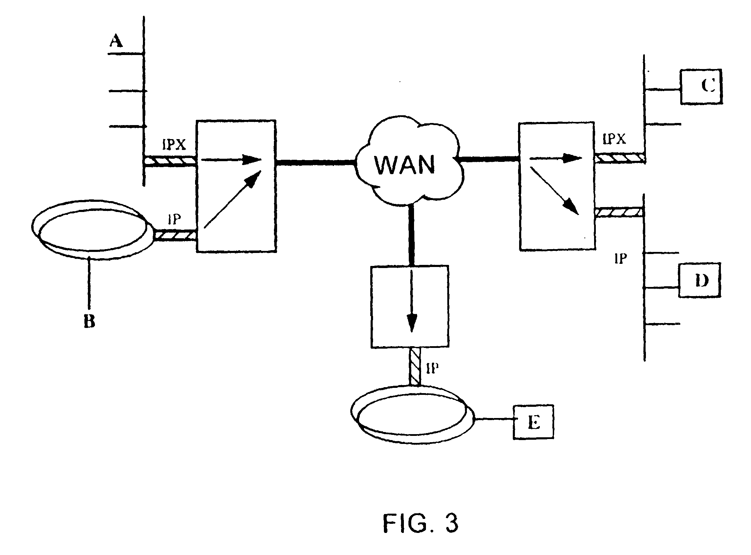

FIG. 3 illustrates a possible configuration of multiple virtual routers in operation. The virtual routers allow each protocol (i.e. IP and IPX) to share the same physical link. This gives each protocol access to a private virtual network. In the configuration illustrated in FIG. 3, network C is visible to network A through IPX's routing tables, just as networks D and E are visible to network B through IP's routing tables. To each protocol it appears as though it is the only protocol running on the network. The virtual routers isolate the protocols, but maintain connectivity to the media (i.e. the WAN) so that events are broadcast and status information is kept current. Those skilled in the art will realize that each router module 12 may be a multi-protocol router capable of running multiple protocols concurrently. Since it is common for one network to be running many protocols simultaneously, the multiple virtual routers may provide isolation (i.e. independent address space and independent network routing updates for each network) between different clients running the same or different routing protocols.

It will thus be seen that the invention efficiently attains the objects set forth above, among those made apparent from the preceding description. In particular, the invention provides multiple virtual routers. Those skilled in the art will appreciate that the configurations depicted in FIGS. 1, 2 and 3 disclose centralized devices which allow the implementation of separate networks over common infrastructure while providing security and performance to each network without the need to upgrade customer premise equipment.

## Claims

1. A multiple virtual router comprising:
a plurality of routing modules (12);
a port (14) logically coupleable to different ones of said plurality of routing modules; and
a management routing module (18) connectable to each of said plurality of routing modules,
**characterized in that**:
said management routing module is capable of selectively communicating with and configuring each of said plurality of routing modules so as to allow configuration and diagnostic access to said plurality of routing modules in a manner that takes place out-of-band from normal user traffic through at least one of said plurality of routing modules; and
wherein a first of said plurality of routing modules is assigned a higher priority for routing data than others of said plurality of routing modules.

2. A multiple virtual router as claimed in claim 1 wherein said management routing module is configured to have a higher priority for communicating than said plurality of routing modules.

3. A multiple virtual router as claimed in claim 1 wherein a first of said plurality of routing modules is configured to forward traffic at a higher priority than others of said plurality of routing modules.

4. A multiple virtual router as claimed in claim 1 wherein said management module is capable of configuring at least two of said plurality of routing modules for use by different networks.

5. A multiple virtual router as claimed in claim 4 further comprising a housing (10) wherein said housing has a plurality of ports; at least one of said plurality of ports (14) is logically coupled (16) to each of said plurality of routing modules; and said management module is coupled to said at least one of said plurality of ports.

6. A method of configuring a multiple virtual router, said method comprising the steps of:
logically coupling a management module (18) to a plurality of routing modules (12); and
logically coupling a port (14) to different ones of said plurality of routing modules;
**characterised in that** the method further comprises the steps of:
configuring said plurality of routing modules with said management module so as to allow configuration and diagnostic access to said plurality of routing modules in a manner that takes place out-of-band from normal user traffic through at least one of said plurality of routing modules; and
assigning a first of said plurality of routing modules a higher priority for routing data than others of said plurality of routing modules.

7. The method recited in claim 6 further comprising:
configuring said management module to have a higher priority for routing than said plurality of routing modules.

## Patentansprüche

1. Mehrfacher virtueller Router mit:
einer Anzahl von Router-Modulen (12);
einem Port (14), der logisch mit unterschiedlichen der Anzahl von Router-Modulen koppelbar ist; und
einem Verwaltungs-Router-Modul (18), das mit jedem der Anzahl von Router-Modulen verbindbar ist,
**dadurch gekennzeichnet, dass**:
das Verwaltungs-Router-Modul in der Lage ist, selektiv mit jedem der Anzahl von Router-Modulen zu kommunizieren und dieses zu konfigurieren, um einen Konfigurations- und Diagnosezugang an die Anzahl von Router-Modulen in einer Weise zu ermöglichen, die außerhalb des Bandes des normalen Benutzerverkehrs über zumindest eines der Anzahl von Router-Modulen erfolgt; und
einem ersten der Anzahl von Router-Modulen eine höhere Priorität zur Weglenkung von Daten als anderen der Anzahl von Router-Modulen zugeordnet wird.

2. Mehrfacher virtueller Router nach Anspruch 1, bei dem das Verwaltungs-Router-Modul so konfiguriert ist, dass es eine höhere Priorität zur Kommunikation als die Anzahl von Router-Modulen aufweist.

3. Mehrfaches Router-Modul nach Anspruch 1, bei dem ein erstes der Anzahl von Router-Modulen zur Weiterleitung von Verkehr mit einer höheren Priorität als andere der Anzahl von Router-Modulen konfiguriert ist.

4. Mehrfacher virtueller Router nach Anspruch 1, bei dem das Verwaltungs-Modul in der Lage ist, zumindest zwei der Anzahl von Router-Modulen zur Verwendung durch unterschiedliche Netzwerke zu konfigurieren.

5. Mehrfacher virtueller Router nach Anspruch 4, der weiterhin ein Gehäuse (10) aufweist, wobei das Gehäuse eine Anzahl von Ports aufweist, wobei zumindest einer der Anzahl von Ports (14) logisch (16) mit jedem der Anzahl von Router-Modulen gekoppelt ist, und wobei das Verwaltungs-Modul mit dem genannten zumindest einen der Anzahl von Ports gekoppelt ist.

6. Verfahren zur Konfiguration eines mehrfachen virtuellen Routers, wobei das Verfahren die folgenden Schritte umfasst:
logisches Koppeln eines Verwaltungs-Moduls (18) mit einer Anzahl von Router-Modulen (12); und
logisches Koppeln eines Ports (14) mit unterschiedlichen der Anzahl von Router-Modulen;
**dadurch gekennzeichnet, dass** das Verfahren weiterhin die folgenden Schritte umfasst:
Konfigurieren der Anzahl von Router-Modulen mit dem Verwaltungs-Modul derart, dass ein Konfigurations- und Diagnose-Zugang an die Anzahl von Router-Modulen in einer Weise ermöglicht wird, die außerhalb des Bandes des Normalen Benutzerverkehrs durch zumindest eines der Anzahl von Router-Modulen erfolgt; und
Zuordnen einer höheren Priorität zur Weglenkung von Daten zu einem ersten der Anzahl von Router-Modulen als zu anderen der Anzahl von Router-Modulen.

7. Verfahren nach Anspruch 6, das weiterhin Folgendes umfasst:
Konfigurieren des Verwaltungs-Moduls derart, dass es eine höhere Priorität zur Weglenkung aufweist, als die Anzahl von Router-Modulen.

## Revendications

1. Routeur virtuel multiple comprenant :
une pluralité de modules de routage (12) ;
un port (14) pouvant être couplé logiquement à différents modules de ladite pluralité de modules de routage ; et
un module de routage de gestion (18) pouvant être connecté à chacun des modules de ladite pluralité de modules de routage,
**caractérisé en ce que** :
ledit module de routage de gestion est capable de communiquer de manière sélective avec chacun des modules de ladite pluralité de modules de routage et de configurer ceux-ci, de façon à permettre l'accès, pour la configuration et le diagnostic, à ladite pluralité de modules de routage d'une manière qui se fait hors bande par rapport au trafic d'utilisateur normal via au moins l'un des modules de ladite pluralité de modules de routage ; et
dans lequel un premier module de ladite pluralité de modules de routage se voit attribuer une priorité plus élevée pour router des données que d'autres modules de ladite pluralité de modules de routage.

2. Routeur virtuel multiple selon la revendication 1, dans lequel ledit module de routage de gestion est configuré de manière à avoir une priorité plus élevée pour communiquer que ladite pluralité de modules de routage.

3. Routeur virtuel multiple selon la revendication 1, dans lequel un premier module de ladite pluralité de modules de routage est configuré pour envoyer le trafic avec une priorité plus élevée que les autres modules de ladite pluralité de modules de routage.

4. Routeur virtuel multiple selon la revendication 1, dans lequel ledit module de routage de gestion est capable de configurer au moins deux des modules de ladite pluralité de modules de routage pour une utilisation par différents réseaux.

5. Routeur virtuel multiple selon la revendication 4, comprenant en outre un boîtier (10), dans lequel ledit boîtier a une pluralité de ports ; au moins l'un des ports de ladite pluralité de ports (14) est couplé logiquement (16) à chacun des modules de ladite pluralité de modules de routage ; et ledit module de gestion est couplé audit au moins un port de ladite pluralité de ports.

6. Procédé pour configurer un routeur virtuel multiple, ledit procédé comprenant les étapes suivantes:
coupler logiquement un module de gestion (18) à une pluralité de modules de routage (12) ; et
coupler logiquement un port (14) à différents modules de ladite pluralité de modules de routage ;
**caractérisé en ce que** le procédé comprend en outre les étapes suivantes:
configurer ladite pluralité de modules de routage avec ledit module de gestion de façon à permettre l'accès, pour la configuration et le diagnostic, à ladite pluralité de modules de routage d'une manière qui se fait hors bande par rapport au trafic utilisateur normal via au moins l'un des modules de ladite pluralité de modules de routage ; et
attribuer à un premier module de ladite pluralité de modules de routage une priorité plus élevée pour router les données que les autres modules de ladite pluralité de modules de routage.

7. Procédé selon la revendication 6, comprenant en outre l'étape suivante:
configurer ledit module de gestion de manière à ce qu'il ait une priorité plus élevée que ladite pluralité de modules de routage.
